# EUROPEAN PATENT SPECIFICATION

(11) **EP 0 352 943 B1**
(45) Date of publication and mention of the grant of the patent: **28.06.1995**
(21) Application number: 89307149.8
(22) Date of filing: 14.07.1989
(51) Int. Cl.: B29C 33/76, B29C 37/00

(54) **Method for producing a sheet member containing at least one enclosed channel**
Verfahren zum Herstellen einer Platte mit mindestens einem eingebauten Kanal
Procédé de fabrication d'une plaque munie d'au moins un canal incorporé

(30) Priority: 25.07.1988 US 224336
(43) Date of publication of application: 31.01.1990
(73) Proprietor: MINNESOTA MINING AND MANUFACTURING COMPANY, St. Paul, Minnesota 55133-3427 (US)
(72) Inventor: Hoopman, Timothy L. c/o Minnesota Mining and, St. Paul Minnesota 55133-3427 (US); Johnson, Dee Lynn c/o Minnesota Mining and, St. Paul Minnesota 55133-3427 (US); Krinke, Harlan L. c/o Minnesota Mining and, St. Paul Minnesota 55133-3427 (US)
(74) Representative: Baillie, Iain Cameron

(56) References cited:
- EP-A- 0 170 178
- DE-C- 3 522 958
- FR-A- 1 133 360
- US-A- 3 498 371
- US-A- 3 795 559
- US-A- 4 285 779
- US-A- 4 428 801
- METALL OBERFLÄCHE vol. 36, no. 7, July 1982, MÜNCHEN, DE pages 327 - 332;SUCHENTRUNK: 'GALVANOFORMUNG VON HOCHFRQUENZBAUTEILEN '

## Description

### Technical Field

The present invention relates to a method for producing a sheet member having at least one enclosed channel.

### Background Art

Articles have been constructed in the past having a plurality of discrete tubes bonded to each other, or to a common support structure, forming channels for the circulation of fluids. Additionally, holes may be machined into a solid body to form channels. U.S. Patent No. 4,712,158 discloses a cooling plate for electronic circuit components. An undulating cooling passage is formed in the cooling plate, such as by abutting two complementary plates having aligned grooves. U.S. Patent No. 4,516,632 discloses a fluid heat exchanger formed from a stack of thin metal sheets bonded together. Alternating slotted and unslotted sheets form fluid flow channels within the stack.

However, such articles have been difficult and expensive to manufacture, particularly with extremely small, long or closely spaced passageways, or for thin articles.

Another prior art document DE-A-3,522,958 discloses a method of manufacturing an article having a base body which has a surface structure of channels, the method involving filling the channels with flexible, elastically extensible profile cords and depositing a cover layer over the base body and the profile cords. After the deposition has taken place, the profile cords are drawn out of the channels leaving behind a closed tubular structure.

A further prior art document EP-A-0,170,178 relates to a removable core for the manufacture of tubular structures fibrous material. The core consists of a foam material externally covered with a heat shrink sleeving material. After a tubular structure has been formed on the surface of the core, the core is heated and the foam material softens or crumples. The core may then be removed from the tubular structure.

According to the present invention there is provided a method for making a unitary article having a body with a plurality of enclosed fluid channels extending through said body, comprising the steps of:
(a) providing a plurality of fibers;
(b) arranging said fibers in accordance with a predetermined pattern;
(c) forming said body as a single structure encompassing each of said plurality of fibers, as arranged in said predetermined pattern, by chemically depositing body forming material about said plurality of fibers for enveloping said plurality of fibers and for generating said single structure body of said unitary article with said plurality of enclosed channels in said body about said fibers;
(d) changing the relative cross sectional areas of at least one of the cross sectional areas of said fibers and said channels so that the cross sectional areas of said channels become larger than the cross sectional areas of said fibers; and
(e) extracting said fibers from within said channels thereby leaving open channels for facilitating circulation of fluid therethrough.

Thus, the present invention provides a method for producing an article having at least one enclosed channel that is quickly and efficiently constructed and particularly adapted for producing multiple elongated channels of small diameter in a thin article.

### Brief Description of Drawing

The present invention will be further described with reference to the accompanying drawing wherein like reference numerals refer to like parts in the several views, and wherein:
Figure 1 is a perspective view of a plurality of parallel fibers arranged in a row according to one step in the present invention.
Figure 2 is a perspective view of a plurality of fibers with a body formed about the fibers, shown partially broken away, to form enclosed channels according to another step in the present invention.
Figure 3 is a transverse cross sectional view of a portion of the body and fibers according to another step in the present invention.
Figure 4 is a transverse cross sectional view of the body in Figure 3 with the fibers extracted to open the channels according to another step in the present invention.
Figure 5A is a longitudinal cross sectional view of a body constructed according to this invention with a fiber located within a channel.
Figure 5B is a longitudinal cross sectional view of the article of Figure 5A with a portion of the fiber elongated, reduced in cross sectional area and extracted from the channel.
Figure 5C is a longitudinal cross sectional view of the body of Figure 5B with the fiber fully extracted and the channel opened.
Figure 6 is a perspective view of an alternative embodiment of this invention with a fiber arranged in a desired pattern on a support structure having an adhesive surface in contact with the fiber.
Figure 7 is a cross sectional view of a body partially formed about a fiber adhered to the support surface of Figure 6.
Figure 8 is a cross sectional view of the fiber of Figure 7 removed from the support surface and the fiber enveloped by the body.

### Detailed Description

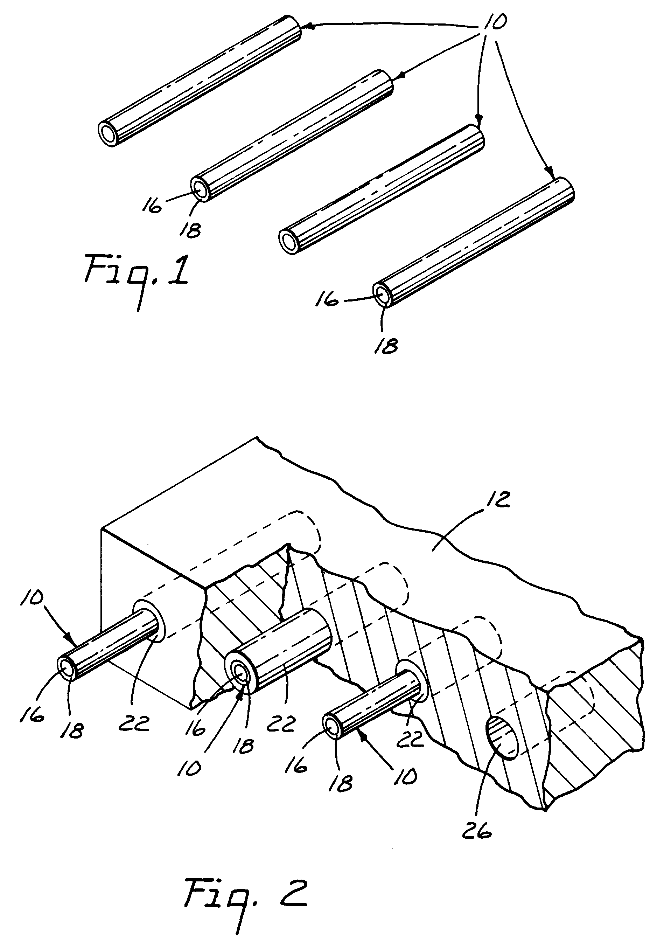

Referring now to Figure 1, the method of this invention includes the steps of providing at least one fiber 10 and arranging the fiber in a desired pattern, such as a row of parallel straight fibers as shown. For the purposes of this invention, the term "fiber" includes any slender elongate member having a desired cross sectional size and shape and formed from one or more filaments. For instance, a fiber may be formed by twisting or braiding multiple filaments so that the fiber has a helically fluted contour. Any of the one or more filaments forming the fiber may be solid or hollow. In the illustrated embodiment, the fibers each are formed from a single cylindrical filament.

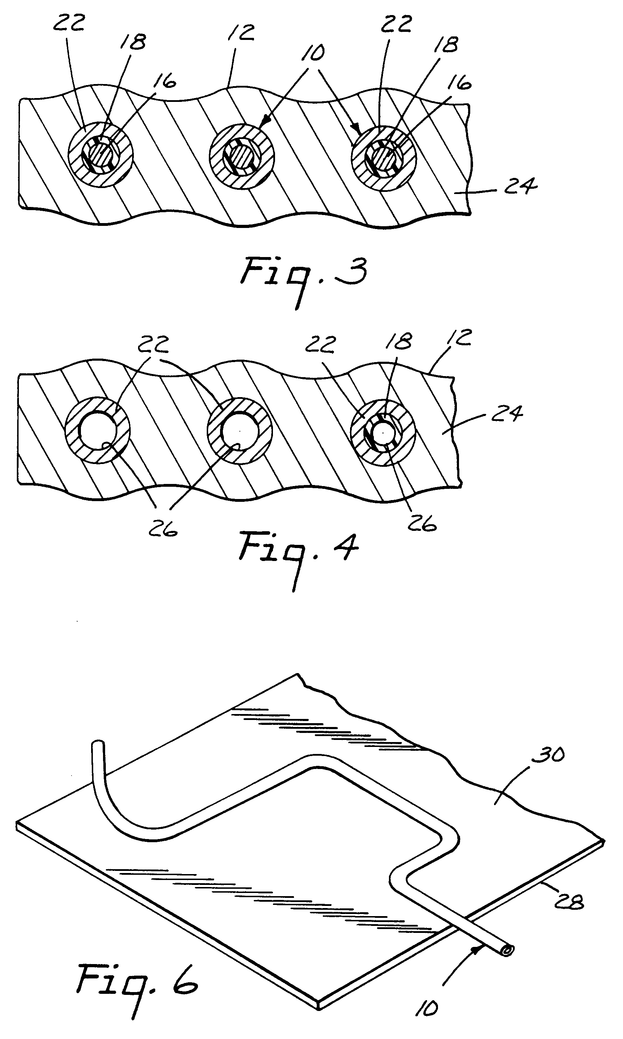

The article of this invention is constructed by forming body 12 that envelopes the fibers, as shown in Figures 2 and 3, with at least one end of each fiber 10 extending beyond the body. Body 12 may be formed such as by molding or casting a plastic or ceramic material about the fibers so that the fiber's are completely enveloped by the material and channels 26 are produced in the body about each of the fibers.

However, in the preferred embodiment of the invention, material such as copper and nickel is electrodeposited about the fibers to form body 12 that envelopes the fibers. One or more of the fibers includes an electrically conductive outer surface to attract the electrodepositable material. Non conductive fibers may interspersed with the conductive fibers. The electrically conductive outer surface of the fibers may be provided by constructing the fiber of electrically conductive material, such as a metallic material. Alternatively, the fiber may be constructed of a non conductive material, such as a polymeric material at core 16, with an electrically conductive layer 18, such as a metallic material, coated on the exterior of the core. In another embodiment not shown, fibers having non conductive surfaces are placed adjacent to a conductive plate (not shown) or the like so that the material electrodeposited on the conductive plate envelopes the fibers in a body as herein described. The conductive plate may remain with the body formed about the fibers, if desired.

In one example, an article according to the present invention was produced by providing a continuous fiber of unoriented polypropylene having a circular cross section 0.007 inches (0.018 cm) in diameter. The fiber was wound about a pair of parallel threaded rods (not shown) 10 inches (25.4 cm) long and 0.75 inches (1.9 cm) in diameter spaced apart 3.00 inches (7.6 cm) center to center, forming a part of a rigid framework for supporting the fiber, so that the fiber formed two parallel rows of fiber segments extending between the parallel rods, each of the rows on opposite sides of the rods. The fiber segments in each row had a center to center spacing of 0.018 inches (0.046 cm) determined by the pitch of the threads on the rods. The fiber was adhered to the rods by applying an epoxy over the fiber and the threads on each of the rods. After the epoxy has solidified, one row of the fiber segments were cut away to provide unrestricted access to both sides of the fibers segments in the remaining row when immersed in the plating bath. The exposed portions of the fibers were then metallized to provide a conductive outer surface. All surfaces of the framework and fibers on which material was not to be electrodeposited were covered by a pressure sensitive adhesive vinyl tape.

The framework and remaining row of fiber segments were first immersed in a nickel sulfamate bath (not shown) containing 110,5 g/ℓ (16 ounces/gallon) of nickel; 3,45 g/ℓ (0.5 ounces/gallon) of nickel bromide; and 27,6 g/ℓ (4.0 ounces/gallon) of Boric acid. The remainder of the plating bath was filled with distilled water. A quantity of S-nickel Anode pellets were suspended by a Titanium basket in the plating bath. The plating bath was continuously filtered through a 5 micron filter. The temperature of the bath was maintained at 32,2°C (90°F). A Ph of 4.0 was maintained in the plating bath solution. A current density of 20 amps per square foot was applied to the fibers for three hours with the fibers and framework continuously rotated at six r.p.m. about an axis parallel to and equidistant between the threaded rods. An initial layer (22 in Figures 2,3,4, 5A,5B, and 5C) of nickel 0.003 inches (0.008 cm) thick was plated individually about each of the fibers, but a common body was not produced.

The fibers and framework were then placed in a second plating bath containing 29 ounces/gallon of Copper Sulfate crystals; 8.0 ounces/gallon of Sulfuric Acid; 50 parts per million (ppm) of Hydrochloric Acid; Cuflex No. 321 (0.6%) and Cuflex No. 320H (0.3%) both marketed by McGean-Rocho Inc. of Cleveland, Ohio. The remainder of the second plating bath was filled with distilled water. A quantity of Phos-Copper Anode pellets were suspended by a Titanium basket in the plating bath. The plating bath was continuously filtered through a 5 micron filter. The temperature of the bath was maintained at 90°F. The framework and remaining row of fiber segments were immersed in the second plating bath and continuously rotated at six r.p.m. A current density of 60 amps per square foot was applied to the second plating bath and the fibers for eighteen hours. Upon removal, a body was produced having an average thickness of 0.075 inches (0.19 cm).

The copper 24 electroformed about the outer layers of nickel in the Example forms a unitary body 12 about the fibers. The nickel defines channels 26 in the body that are resistant to many corrosive materials which may be circulated through the channels after the channels have been opened as described hereinafter, while the copper portion of the body provides efficient heat transfer characteristics. Of course, a body may be electroformed about the fiber using only one material, or more than two, if desired.

After body 12 has been formed about the fibers, the fiber must be extracted from the body to open channels 26, as shown in Figures 2 and 4. In the broadest sense, the step of extracting the fibers from the body includes the process of changing the relative cross sectional areas of the channels within the body with respect to the cross sectional areas of the respective fibers within the channels so that the cross sectional areas of the channels are larger than the cross sectional areas of the fibers to facilitate the extraction of the fibers by pulling the fibers from the body. For instance, if the body is constructed of a material having a higher coefficient of thermal expansion than the coefficient of thermal expansion of the material used to construct the fibers, an increase in temperature of the body and fibers will result in the cross sectional areas of the channels increasing relative to the cross sectional areas of the fibers. If the reverse is true, a decrease in the temperature of the body and the fiber will reduce the cross sectional areas of the fibers at a greater rate than the cross sectional areas of the channels in the body. This latter case is typified with the use of certain polymeric fibers enclosed in metallic body. In yet another alternative embodiment, the fibers are constructed from heat shrink tubing so that the application of heat will cause the heat shrink tubing to radially contract within a channel. Once the relative cross sectional areas of the channels has been increased with respect to the cross sectional areas of the fibers, the exposed ends of the fibers may be grasped externally of the body and a tensioning force applied to the fibers sufficient to extract the fibers from the body without exceeding the strength of the fibers. In yet another embodiment, fibers may be provided that are inflatable. Once inflated, the body may be formed about the fibers as herein described. The fibers are then deflated and extracted from the channels.

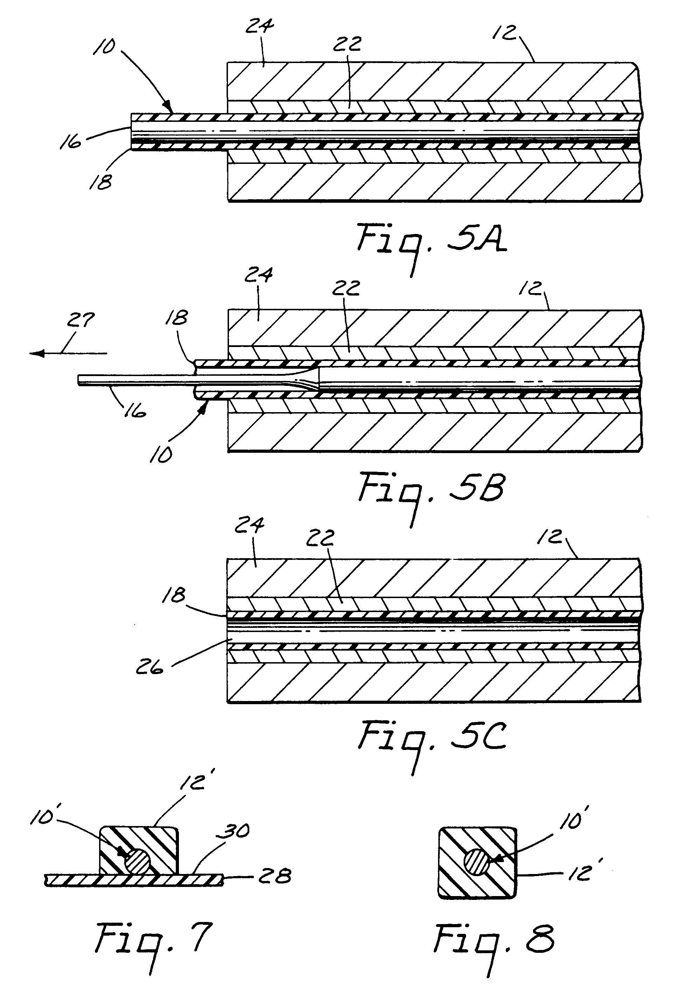

However, in the preferred embodiment of the invention shown in Figure 5A, fiber 10 is constructed of material that is extensible in a longitudinal direction 27. Fibers constructed of polymeric materials may be used, such as elastomeric materials. In particular, fibers constructed of unoriented polypropylene have been found to be well adapted for use in the present method. The extensible fiber is removed from the body of the article by gripping the exposed end of the fiber and applying a tensioning force. The material of fiber 10 becomes oriented and elongated in a longitudinal direction, as shown in Figure 5B, and consequently the cross sectional area of the fiber will be reduced relative to the cross sectional area of the channel. Elongation of the entire fiber will enable fiber 10 to be removed from channel 26 with minimal resistance, as shown in Figure 5C. If desired, one or more of the fibers may be left in place in the body of the article.

The fibers may be coated with a material that reduces the coefficient of friction between the fiber and the walls of the channel containing the fiber to reduce the force require to extract the fiber from the channel. Lubricants, such as petroleum products or graphite powders may be used for this purpose. As is also shown in Figure 4, a fiber may be sheathed in an outer layer designed to separate from the fiber and remain in the channel after the remainder of the fiber is removed from the channel. For instance, the sheathed outer layer of a fiber may be constructed of materials, such as glass, that are resistant to corrosive fluids to be circulated through the opened channels. Fibers of this type would eliminate the need to form the body with different materials as in the Example discussed herein.

Figure 6 illustrates an alternate technique for arranging the fibers. A support structure 28 is provided having a pressure sensitive adhesive surface 30. A fiber 10′ may be secured on the adhesive surface 30 in a desired pattern. As shown in Figure 7, a portion of body 12′ is formed about the fiber secured to adhesive surface 30. In Figure 8, the process of forming the body about fiber 10′ is completed by removing the fiber and the body portion 12′ away from the adhesive surface 30 and the remainder of the body 12 formed about fiber 10′ so that the fiber is completely enveloped by the body.

In yet another alternate arrangement, fibers may be provided that include ductile filaments such as a metallic wire sheathed by an outer layer of heat shrink tubing. Each fiber may be bent into a desired three dimensional pattern and will maintain the pattern until the body is formed about the fibers. The wires may be pulled from the channels. Heat is applied to the body to shrink the heat shrink tubing, enabling the tubing to be extracted from the body and open the channels.

One of the primary applications for a sheet member produced according to the present invention is to circulate fluids through the channels in the sheet member. For instance, an object (not shown) placed in contact with a sheet member will transfer heat in either direction by conduction through the body between the object and a fluid circulated through the channels.

Tables I and II below illustrate the results of a series of tests performed on a sheet member constructed according to the present invention and used for circulation of a fluid for heat transfer purposes. The sheet member used in the tests was 1 inch x 1 inch (2.54 cm x 2.54 cm) in length and width and 0.033 inches (1.5 cm) in thickness. The sheet member had 162 channels, each having a cross section of 0.00015 square inches (0.0010 cm²).

A silicon wafer 0.4 inches (1.0 cm) x 0.6 inches (0.5 cm) thick was soldered to one side of the sheet member by an Indium solder layer 0.005 inches (0.012 cm) in thickness. The silicon wafer was centered along one transverse edge of the sheet member.

In the tests, power was applied to the silicon wafer as shown in the right hand column of Tables I and II. In Table I water was circulated through the channels of the sheet member for conducting heat away from the silicon wafer. The effectiveness of the heat transfer as the applied power was increased is shown in the column entitled "Δ T Chip to Fluid/°Celsius". In Table II, Fluorinert™ 43 (a fluorochemical marketed by Minnesota Mining and Manufacturing Company of St. Paul, Minnesota) was substituted for the water.

**TABLE I**

| (water) | | | | | |
|---|---|---|---|---|---|
| Test No. | Fluid Temp C° | Flow Rate gr./sec. cm width | Pressure Drop N/cm² cm Length | Δ T Chip to Fluid/C° | Power Density W/cm² |
| 1 | 23 | 0 | 0 | 15 | 1 |
| 2 | 23 | 2.5 | 0.5 | 11 | 21 |
| 3 | 23 | 2.5 | 0.5 | 20 | 50 |
| 4 | 22 | 5.0 | 1.1 | 19 | 50 |
| 5 | 23 | 5.0 | 1.0 | 30 | 82 |
| 6 | 24 | 10.0 | 2.8 | 26 | 83 |
| 7 | 24 | 10.0 | 2.8 | 49 | 162 |
| 8 | 24 | 10.0 | 2.7 | 65 | 213 |

**TABLE II**

| (Fluorinert™ 43) | | | | | |
|---|---|---|---|---|---|
| Test No. | Fluid Temp C° | Flow Rate gr./sec. cm width | Pressure Drop N/cm² cm length | Δ T Chip to Fluid/C° | Power Density W/cm² |
| 1 | 22 | 0 | 0 | 60 | 6 |
| 2 | 29 | 3.8 | 1.4 | 9 | 15 |
| 3 | 28 | 3.8 | 1.4 | 37 | 57 |
| 4 | 28 | 3.8 | 1.4 | 54 | 82 |
| 5 | 29 | 4.5 | 1.7 | 78 | 110 |
| 6 | 24 | 6 | 2.8 | 8 | 13 |
| 7 | 27 | 6 | 2.8 | 35 | 59 |
| 8 | 28 | 6 | 2.8 | 46 | 84 |
| 9 | 29 | 6 | 2.8 | 64 | 114 |
| 10 | 29 | 6 | 2.8 | 85 | 128 |

A method is thus described for producing an article having one or more enclosed channels extending therethrough that is conveniently and inexpensively constructed. A sheet member may be produced that includes a plurality of elongate channels of small cross sectional area. The size and spacing of the channels is limited only by the size of the fiber that may be enveloped in the body and extracted from the channel. Sheet members may be produced that are thin enough and constructed of a ductile material so as to produce flexible sheet members, such as metallic foils.

The present invention has now been described with reference to several embodiments thereof. It will be apparent to those skilled in the art that many changes can be made in the embodiments described without departing from the scope of the present invention. For instance, the fibers may be arranged in a three dimensional pattern, or with two or more fibers in contact with each other so that the channels formed in the body intersect where the fibers are in contact. Thus, the scope of the present invention should not be limited to the structures described in this application, but only by structures described by the language of the claims.

## Claims

1. A method for making a unitary article having a body (12) with a plurality of enclosed fluid channels (26) extending through said body, comprising the steps of:
(a) providing a plurality of fibers (10);
(b) arranging said fibers (10) in accordance with a predetermined pattern;
(c) forming said body (12) as a single structure encompassing each of said plurality of fibers (10), as arranged in said predetermined pattern, by chemically depositing body forming material (12) about said plurality of fibers for enveloping said plurality of fibers (10) and for generating said single structure body of said unitary article with said plurality of enclosed channels in said body about said fibers;
(d) changing the relative cross sectional areas of at least one of the cross sectional areas of said fibers (10) and said channels so that the cross sectional areas of said channels become larger than the cross sectional areas of said fibers; and
(e) extracting said fibers (10) from within said channels (26) thereby leaving open channels for facilitating circulation of fluid therethrough.

2. The method of claim 1, further characterised by the step of electrodepositing material on a conductive outer surface (18) of each fiber (10) to form the body (12).

3. The method of claim 1, further characterised in that the fibers (10) are constructed of extensible material and wherein step (a) comprises the step of elongating the fibers (10) in a longitudinal direction (27) to reduce the cross sectional area of the fibers (10) with respect to the cross sectional area of the respective channel (26) to facilitate the extraction of the fibers from the respective channel in step (e) of claim 1.

4. The method of claim 1, further characterised in that step (a) includes the step of altering the temperature of the body (12) and the fibers (10) to increase the relative cross sectional area of the channel with respect to the cross sectional area of the fibers and facilitate the extraction of the fibers from the channel in step (e) of claim 1.

5. The method of claim 4, further characterised in that each fiber (10) is a tube constructed of plastic that radially contracts in response to the increase of temperature of the article to reduce the cross sectional area of the fiber with respect to the cross sectional area of the channel (26) and facilitate the extraction of the fiber from the channel in step (e) of claim 1.

6. The method of claim 1, further characterised in that prior to the step of forming the body of the article the step of coating the fibers (10) with a material that reduces the coefficient of friction between the fibers and the surface of the channels (26) to facilitate the extraction of the fibers from each respective channel in the article in step (e) of claim 1.

7. The method of claim 1, further characterised in that the step of arranging the fibers in a desired pattern includes the step of adhering the fibers (10) on an adhesive surface (30) in the desired pattern.

8. The method of claim 7, further characterised in that the step of arranging the fibers in a desired pattern includes the further step of removing the fibers (10) from the adhesive surface (30) to enable the material to envelope the fibers.

9. The method of claim 1, further characterised in that the step of arranging the fibers in a desired pattern includes the steps of providing first and second fibers (10) and placing the fibers in contact with each other prior to the step of forming the body (12) of the article about the fibers (10) to produce two channels (26) that intersect within the body.

10. The method of claim 1, further characterised by providing each fiber (10) with an outer sheathing layer (18).

11. The method of claim 10, further characterised in step (b) by the step of extracting the fibers (10) from the channel (26) while separating the sheathing layer (18) from the core (16) of the fibers (10) so that the sheathing (18) remains in the channel.

## Patentansprüche

1. Verfahren zur Herstellung eines einstückigen Gegenstandes mit einem Körper (12) mit einer Vielzahl von umschlossenen Flüssigkeitskanälen (26), die sich durch den Körper erstrecken, umfassend die folgenden Schritte:
(a) Bereitstellen einer Vielzahl von Fasern (10);
(b) Anordnen der Fasern (10) nach einem vorbestimmten Muster;
(c) Ausbilden des Körpers (12) als eine einzige Struktur, welche jede der vielzahl von Fasern (10) umfaßt, wie sie in dem vorbestimmten Muster angeordnet sind, indem den Körper bildendes Material (12) um die Vielzahl von Fasern (10) herum chemisch abgeschieden wird, um die Vielzahl von Fasern (10) einzuhüllen und den aus einer einzigen Struktur bestehenden Körper des einstückigen Gegenstandes mit der Vielzahl von die Fasern umschließenden Kanälen in dem Körper herzustellen;
(d) Ändern der relativen Querschnittsfläche von mindestens einer der Querschnittsflächen der Fasern (10) und der Kanäle, so daß die Querschnittsflächen der Kanäle größer werden als die Querschnittsflächen der Fasern; und
(e) Herausziehen der Fasern (10) aus den Kanälen (26), wodurch offene Kanäle zurückbleiben, damit Flüssigkeiten leichter darin zirkulieren können.

2. Verfahren nach Anspruch 1, des weiteren dadurch gekennzeichnet, daß Material auf eine leitende Außenseite (18) jeder Faser (10) galvanisch abgeschieden wird, um den Körper (12) herzustellen.

3. Verfahren nach Anspruch 1, des weiteren dadurch gekennzeichnet, daß die Fasern (10) aus dehnbarem Material bestehen, und daß Schritt (a) den Schritt des Dehnens der Fasern (10) in Längsrichtung (27) umfaßt, um die Querschnittsfläche der Fasern (10) gegenüber der Querschnittsfläche des jeweiligen Kanals (26) zu verkleinern, damit die Fasern in Schritt (e) von Anspruch 1 leichter aus dem jeweiligen Kanal herausgezogen werden können.

4. Verfahren nach Anspruch 1, des weiteren dadurch gekennzeichnet, daß Schritt (a) den Schritt des Änderns der Temperatur des Körpers (12) und der Fasern (10) umfaßt, um die relative Querschnittsfläche des Kanals gegenüber der Querschnittsfläche der Fasern zu erhöhen und das Herausziehen der Fasern aus dem Kanal in Schritt (e) von Anspruch 1 zu erleichtern.

5. Verfahren nach Anspruch 4, des weiteren dadurch gekennzeichnet, daß jede Faser (10) ein aus Kunststoff bestehendes Röhrchen ist, das sich entsprechend dem Anstieg der Temperatur des Gegenstandes radial zusammenzieht, um die Querschnittsfläche der Faser gegenüber der Querschnittsfläche des Kanals (26) zu verkleinern und das Herausziehen der Faser aus dem Kanal in Schritt (e) von Anspruch 1 zu erleichtern.

6. Verfahren nach Anspruch 1, des weiteren dadurch gekennzeichnet, daß vor dem Schritt des Formens des Körpers des Gegenstandes die Fasern (10) mit einem Material beschichtet werden, welches den Reibungskoeffizienten zwischen den Fasern und der Oberfläche der Kanäle (26) reduziert, um das Herausziehen der Fasern aus dem jeweiligen Kanal in dem Gegenstand in Schritt (e) von Anspruch 1 zu erleichtern.

7. Verfahren nach Anspruch 1, des weiteren dadurch gekennzeichnet, daß der Schritt des Anordnens der Fasern in einem gewünschten Muster das Aufkleben der Fasern (10) auf eine Klebefläche (30) in dem gewünschten Muster umfaßt.

8. Verfahren nach Anspruch 7, des weiteren dadurch gekennzeichnet, daß der Schritt des Anordnens der Fasern in einem gewünschten Muster des weiteren das Entfernen der Fasern (10) von der Klebefläche (30) umfaßt, damit das Material die Fasern umhüllen kann.

9. Verfahren nach Anspruch 1, des weiteren dadurch gekennzeichnet, daß beim Anordnen der Fasern in einem gewünschten Muster erste und zweite Fasern bereitgestellt werden und die Fasern miteinander in Kontakt gebracht werden, bevor der Körper (12) des Gegenstandes um die Fasern (10) herum ausgebildet wird, um zwei Kanäle (26) herzustellen, die sich in dem Körper schneiden.

10. Verfahren nach Anspruch 1, des weiteren dadurch gekennzeichnet, daß jede Faser (10) mit einer äußeren Mantelschicht (18) versehen wird.

11. Verfahren nach Anspruch 10, des weiteren in Schritt (b) gekennzeichnet durch den Schritt des Herausziehens der Fasern (10) aus dem Kanal (26), während die Mantelschicht (18) von dem Kern (16) der Fasern (10) getrennt wird, so daß der Mantel (18) in dem Kanal bleibt.

## Revendications

1. Procédé de fabrication d'un article unitaire ayant un corps (12) avec une pluralité de canaux de fluide incorporés (26) s'étendant à travers ledit corps, qui comprend les étapes de :
(a) préparation d'une pluralité de fibres (10) ;
(b) agencement desdites fibres (10) suivant une configuration prédéterminée ;
(c) formation dudit corps (12) comme une structure unique englobant chacune de ladite pluralité de fibres (10), agencées suivant ladite configuration prédéterminée, par dépôt chimique d'une matière de formation de corps (12) autour de ladite pluralité de fibres de façon à envelopper ladite pluralité de fibres (10) et à engendrer ledit corps de structure unique dudit article unitaire, ladite pluralité de canaux étant formés à l'intérieur dudit corps autour desdites fibres ;
(d) modification des sections transversales relatives d'au moins une des sections transversales des dites fibres (10) et desdits canaux, de sorte que les sections transversales desdits canaux deviennent plus grandes que les sections transversales desdites fibres ; et
(e) extraction desdites fibres (10) de l'intérieur desdits canaux (26) de manière à laisser des canaux ouverts pour faciliter la circulation du fluide dans ces canaux.

2. Procédé suivant la revendication 1, caractérisé en outre par l'étape de dépôt électrolytique de matière sur une surface extérieure conductrice (18) de chaque fibre (10) pour former le corps (12).

3. Procédé suivant la revendication 1, caractérisé en outre en ce que les fibres (10) sont en une matière extensible, et en ce que l'étape (a) comprend l'étape d'allongement des fibres (10) dans une direction longitudinale (27) de manière à réduire la section transversale des fibres (10) par rapport à la section transversale du canal respectif (26), afin de faciliter l'extraction des fibres hors du canal respectif à l'étape (e) de la revendication 1.

4. Procédé suivant la revendication 1, caractérisé en outre en ce que l'étape (a) comprend l'étape de modification de la température du corps (12) et des fibres (10) de manière à augmenter la section transversale relative du canal par rapport à la section transversale des fibres et à faciliter l'extraction des fibres hors du canal à l'étape (e) de la revendication 1.

5. Procédé suivant la revendication 4, caractérisé en outre en ce que chaque fibre (10) est un tube en matière plastique qui se contracte radialement en réponse à l'augmentation de température de l'article, de manière à réduire la section transversale de la fibre par rapport à la section transversale du canal (26) et à faciliter l'extraction de la fibre hors du canal à l'étape (e) de la revendication 1.

6. Procédé suivant la revendication 1, caractérisé en outre en ce que, avant l'étape de formation du corps de l'article, on exécute l'étape de revêtement des fibres (10) avec une matière qui réduit le coefficient de frottement entre les fibres et la surface des canaux (26) afin de faciliter l'extraction des fibres hors de chaque canal respectif de l'article, à l'étape (e) de la revendication 1.

7. Procédé suivant la revendication 1, caractérisé en outre en ce que l'étape d'agencement des fibres suivant une configuration désirée comprend l'étape de collage des fibres (10) sur une surface adhésive (30), suivant la configuration désirée.

8. Procédé suivant la revendication 7, caractérisé en outre en ce que l'étape d'agencement des fibres suivant une configuration désirée comprend l'étape supplémentaire d'enlèvement des fibres (10) de la surface adhésive (30) pour permettre à la matière d'envelopper les fibres.

9. Procédé suivant la revendication 1, caractérisé en outre en ce que l'étape d'agencement des fibres suivant une configuration désirée comprend les étapes de préparation d'une première et d'une deuxième fibres (10) et de mise en place des fibres en contact mutuel avant l'étape de formation du corps (12) de l'article autour des fibres (10), pour produire deux canaux (26) qui se rencontrent à l'intérieur du corps.

10. Procédé suivant la revendication 1, caractérisé en outre en ce qu'on applique à chaque fibre (10) une couche extérieure de gainage (18).

11. Procédé suivant la revendication 10, caractérisé en outre en ce que l'étape (b) comprend l'étape d'extraction des fibres (10) hors du canal (26) tout en séparant la couche de gainage (18) du noyau (16) des fibres (10), de sorte que le gainage (18) reste dans le canal.
